# EUROPÄISCHE PATENTSCHRIFT

(11) **EP 1 547 218 B1**
(45) Veröffentlichungstag und Bekanntmachung des Hinweises auf die Patenterteilung: **01.02.2006**
(21) Anmeldenummer: 03807794.7
(22) Anmeldetag: 16.08.2003
(51) Int. Cl.: H02B 13/045

(54) **SAMMELSCHIENENKUPPLUNG FÜR EINE GASISOLIERTE SCHALTANLAGE**
BUS BAR CONNECTION FOR A GAS-INSULATED SWITCHBOARD SYSTEM
COUPLAGE DES BARRES POUR UNE INSTALLATION DE DISTRIBUTION ETANCHE AU GAZ

(30) Priorität: 05.10.2002 DE 10246598
(43) Veröffentlichungstag der Anmeldung: 29.06.2005
(73) Patentinhaber: Alstom, 75116 Paris (FR)
(72) Erfinder: STARCK, Thierry, 93105 Tegernheim (DE); LISTL, Peter, 93161 Sinzing (DE)
(74) Vertreter: Schäfer, Wolfgang
(86) Internationale Anmeldenummer: PCT/EP2003/009080
(87) Internationale Veröffentlichungsnummer: WO 2004/034534

(56) Entgegenhaltungen:
- EP-A- 1 111 748
- DE-C- 19 815 151
- PATENT ABSTRACTS OF JAPAN vol. 1999, no. 09, 30. Juli 1999 (1999-07-30) & JP 11 122730 A (MITSUBISHI ELECTRIC CORP), 30. April 1999 (1999-04-30)

## Beschreibung

Die Erfindung betrifft eine Sammelschienenkupplung nach dem Oberbegriff des Anspruchs 1 und eine damit ausgestattete gasisolierte Schaltanlage, insbesondere eine gasisolierte Mittelspannungsanlage, nach dem Oberbegriff des nebengeordneten Anspruchs.

Bei Schaltanlagen mit gasisolierten Schaltfeldern oder ähnlichen Modulen, die über Sammelschienenkupplungen miteinander verbunden sind, werden nicht nur an die elektrische Kontaktierung hohe Anforderungen gestellt, sondern auch an die Gasabdichtung selbst.

Üblicherweise werden z.B. Kupplungsvorrichtungen mit Doppelkonus-Steckverbindungen eingesetzt, die entweder als Innen- oder als Außenkonus ausgebildet sind. Diese zumeist mechanisch starren Lösungen erfordern eine hochgenaue Toleranz beim Positionieren der Schaltfelder zueinander. Auch sind hohe Anforderungen hinsichtlich der Koaxialität zu erfüllen. Dasselbe gilt auch für andere Lösungen, bei denen die Kupplung der Schaltfelder über eine im Wesentlichen starre mechanische Verbindung erfolgt. Des weiteren stellt die Gasabdichtung im Bereich der Verbindung an sich bereits eine hohe Anforderung an die technische Konstruktion von Sammelschienenkupplungen dar. Gewünscht sind konsequent gasisolierte Sammelschienenkupplungen inklusive Verbindung, die einfach überwacht werden können und dennoch keine "Edelfuge" benötigen.

Die EP-A1-1111748 beschreibt eine derartige Sammelschienenkupplung.

Aufgabe der Erfindung ist es, eine Sammelschienenkupplung für gasisolierte Schaltanlagen vorzuschlagen, die die genannten Anforderungen erfüllt und bei der die oben genannten Nachteile nicht auftreten. Außerdem soll eine Schaltanlage vorgeschlagen werden, deren Schaltfelder über eine solche Sammelschienenkupplung miteinander verbunden sind.

Gelöst wird die Aufgabe durch eine Sammelschienenkupplung mit den Merkmalen des Anspruchs 1 sowie durch eine gasisolierte Schaltanlage mit den Merkmalen des nebengeordneten Anspruchs.

Demnach wird vorgeschlagen, in eine gasisolierte Schaltanlage, die mindestens zwei mit Isoliergas befüllte Schaltfelder hat, eine Sammelschienenkupplung einzusetzen, die mittels mindestens eines elektrischen Verbindungselementes die Schaltfelder miteinander verbindet, wobei die Sammelschienenkupplung einen zwischen die Schaltfelder montierbaren Faltenbalg aufweist, der mit dem Isoliergas befüllbar ist und der das elektrische Kupplungselement der Sammelschienenkupplung gasdicht umschließt.

Durch diese Maßnahmen wird eine sehr flexible Sammelschienenkupplung zwischen den Schaltfeldern bzw. Modulen der Schaltanlage geschaffen, die nicht nur mehr Toleranz beim Zusammenschalten der Teile zu einer Schaltanlage bietet und kostengünstiger ist als die herkömmlichen Lösungen, sondern auch in Bezug auf die Gasabdichtung resistent ist gegen Bewegungen der Schaltfelder bzw. Module aufgrund von Wärmeausdehnungen, Durchbiegung der Seitenwände bei Gasdruckänderung und dergleichen mehr.
Bereits hinsichtlich der Herstellung der Schaltanlage ergeben sich Vorteile, weil eine geringere Genauigkeit bei der Fertigung der Gasbehälter einzuhalten ist. Die Erfindung erleichtert auch die anfallende Baustellenarbeit bei der Errichtung der Schaltanlage, insbesondere die anfallenden Gasarbeiten. Außerdem werden die im Laufe der Betriebslaufzeit anfallenden Wartungsarbeiten, insbesondere der Austausch von Einzelfeldern oder die Erweiterung der Schaltanlage, erheblich erleichtert. Die Sammelschienen-Verbindung ist gasisoliert und somit einfach zu überwachen, etwa durch Sensoren die Druck oder Dichte überwachen.

Besonders vorteilhafte Ausgestaltungen der Erfindung ergeben sich aus den Unteransprüchen.

Demnach ist es besonders vorteilhaft, wenn der Faltenbalg axial verschiebbar angeordnet ist. Dadurch ist eine sehr einfache Demontage der Schaltanlage möglich, weil aufgrund des flexiblen Faltbalges ein Luftspalt zwischen den Schaltfeldern vorgesehen werden kann.

Es ist auch besonders vorteilhaft, wenn der Faltenbalg aus Metall gefertigt ist und wenn der Faltenbalg Dichtungselemente sowie von außerhalb des Faltenbalges montierbare Befestigungselemente aufweist, die eine form- und kraftschlüssige Dichtung mit den Außenwänden der Schaltfelder herstellen. In diesem Zusammenhang ist es von Vorteil, wenn die Dichtungselemente ringförmige Dichtungsmittel umfassen und wenn die Befestigungselemente Schraubverbindungsmittel umfassen.

Denn durch diese weiteren Maßnahmen wird eine besonders leicht von außen durchführbare Montage des Faltenbalges erzielt und für eine sehr montagefreundliche, flexible Abdichtung gegen Gasaustritt gesorgt.

Ein besonderer Vorteil ergibt sich auch, wenn das elektrische Verbindungselement der Sammelschienenkupplung eine elektrisch leitende Klemmverbindung zwischen den Schaltfeldern herstellt. In diesem Zusammenhang ist es von Vorteil, wenn die Sammelschienenkupplung die Sammelschienenrohre der Schaltfelder miteinander verbindet und wenn zumindest eines der Sammelschienenrohre in den vom dem Faltenbalg umschlossenen Bereich der Sammelschienenkupplung hineinragt, so dass zum Befüllen des Faltenbalges das Isoliergas über dieses Sammelschienenrohr in den Faltenbalg einströmt. Vorzugsweise ragen die Enden der beiden Sammelschienenrohre in den Faltbalg hinein, so dass sogar von beiden Seiten Isoliergas zugeführt werden kann.

Auch ergibt sich ein besonderer Vorteil, wenn das elektrische Verbindungselement ein mit Spannfedern versehenes Klemmstück ist, das sich an die Innenwandungen der Sammelschienenrohre anpasst, und wenn das Klemmstück eine elektrisch leitende aber mechanisch nicht dichtende Verbindung zwischen den Sammelschienenrohren herstellt, so dass das Isoliergas sowohl von dem einem Sammelschienenrohr in das andere Sammelschienenrohr als auch in das Innere des Faltenbalges strömt.

Dadurch wird eine über das eine Sammelschienenrohr zentral eingeleitete Begasung des zusammengeschlossenen Verbindungsbereichs ermöglicht. Dazu wird aus dem Zwischenraum zunächst die vorhandene Luft evakuiert und anschließend wird der Zwischenraum mit Isoliergas befüllt.

Im Folgenden werden nun die Erfindung und die sich daraus ergebenden Vorteile anhand eines Ausführungsbeispieles und unter Zuhilfenahme der beiliegenden schematischen Zeichnung näher beschrieben:
- Figur 1,: die eine erfindungsgemäße Sammelschienenkupplung zeigt vor der Kupplung der Schaltfelder; und
- Figur 2,: die die Sammelschienenkupplung nach der Kupplung der Schaltfelder zeigt.

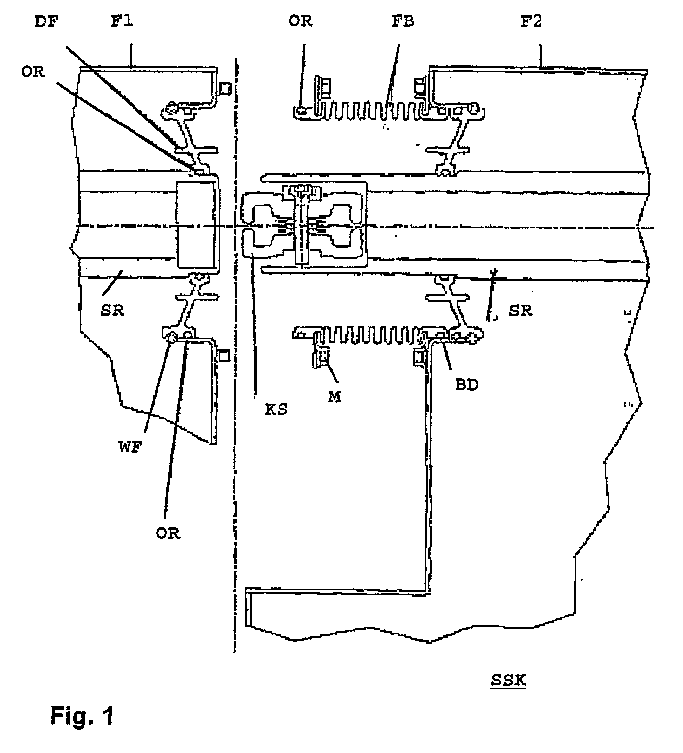

In der Figur 1 ist im Querschnitt eine Sammelschienenkupplung SSK in der entkoppelten Stellung dargestellt, die zwei ausschnittsweise dargestellte Schaltfelder F1 und F2 (linke bzw. rechte Bildhälfte) miteinander verbinden soll.

In den Gasbehältern der beiden Schaltfelder F1 und F2 befinden sich Sammelschienenrohre SR1 bzw. SR2, die jeweils mit einem Ende gasdicht aus dem Behälter heraus ragen, damit sie über die Sammelschienenkupplung SSK miteinander verbunden werden können. Die Gasräume GR1 und GR2 der Schaltfelder F1 bzw. F2 sind schon werkseitig mit Schutz- und Isoliergas befüllt.

Die Sammelschienenrohre SR1 und SR2 koaxial zueinander ausgerichtet und ihre Enden ragen jeweils aus einer mit Dichtungsringen OR, hier mit sogenannten O-Ringen, abgedichteten Durchführung DF heraus. Alle Durchführungen DF befinden sich jeweils an einem Behälterdurchzug BD und sind mittels Dichtungsringen OR gegen ein Entweichen von Isoliergas abgedichtet. Das eine Sammelschienenrohr SR2 des zweiten Schaltfeldes F2 (rechte Bildhälfte) ragt nun aus seiner Durchführung weiter heraus, als das entsprechende Gegenstück des ersten Sammelschienenrohres SR1. Die gezeigten Schaltfelder F1 und F2 sind identisch, jedoch sollen die verschiedenen Bezugszeichen verdeutlichen, dass das eine Feld F1 sich links von der Feldteilungslinie FT befindet und das andere Feld F2 rechts davon.

Im Innern des rechten Sammelschienenrohres SR2 befindet sich ein Klemmstück KS, das den elektrischen Kontakt zwischen den beiden Sammelschienenrohren und damit zwischen den beiden Schalfeldern F1 und F2 herstellten soll. Das Klemmstück KS selbst besteht im Wesentlichen aus zwei halbschalenförmigen Metallteilen, die an die Innenwandung der Sammelschienenrohre SR1 und SR2 angepasst sind. Außerdem hat das Klemmstück KS mindestens eine Spannfeder oder Spannscheibe, die beide Metallteile zum Herstellen des elektrischen Kontaktes fest an die Innenwandungen der Rohre presst.

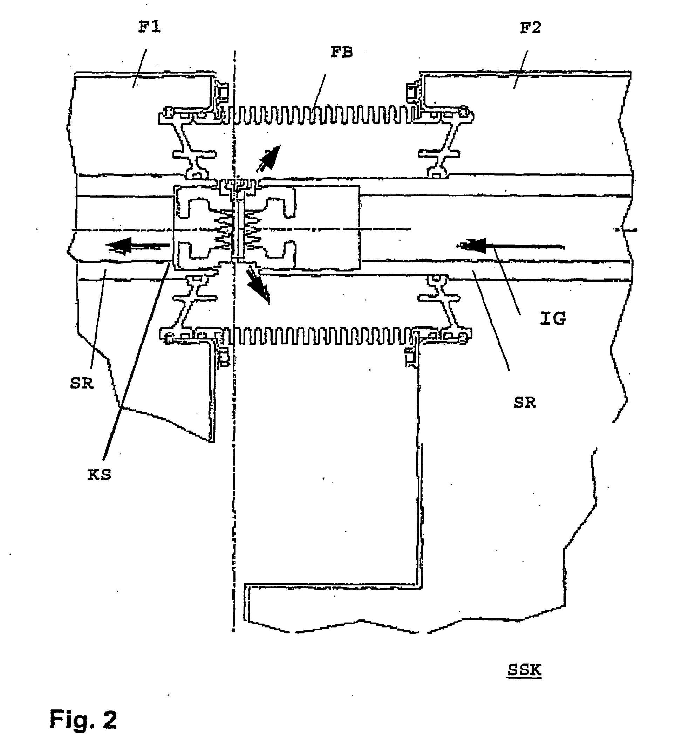

Das in der Fig. 1 dargestellte Klemmstück KS ist axial verschiebbar und nicht an die Innenwandung geklemmt. Die axiale Verschiebung reicht bis zu der in der Fig. 2 dargestellten Stellung, d.h. bis zu der Stelle, wo das Klemmstück KS dann an beide Sammelschienenrohre angeklemmt wird.

Der vorzugsweise aus Metall gefertigte Faltbalg wird beim Montagevorgang (vergleiche Fig. 1 und Fig. 2) von Armen axial an sein linkes Ende zusammen gedrückt, so dass das elektrische Kupplungselement (Kontaktstück) zugänglich ist und leicht in Kupplungsstellung (siehe Fig. 2) verschoben werden kann. Umgekehrt bei der Demontage eines Feldes aus einem Feldverbund, bei der die Verbindungsräume evakuiert werden müssen, können einfach der Metallfaltbalg zusammengedrückt sowie die Kontaktklemmen gelöst und zurück geschoben werden.

Um nun nicht nur die Schaltfelder F1 und F2 der Schaltanlage mit Gas zu isolieren, sondern auch den Bereich der Sammelschienenkupplung SSK begasen zu können, soll dieser Bereich von einem Faltenbalg FB vollständig umschlossen werden. Der Faltenbalg FB sorgt dann für eine gasdichte Isolierung des Bereiches und auch für die geerdete Metall-Kapselung des Sammelschienen-Verbindungsbereichs.

Der Faltenbalg FB, der vorzugsweise aus Metall gefertigt ist, wird an den Seitenwänden (Stirnseiten) der Gasbehälter, d.h. zwischen den Schaltfeldern F1 und F2, montiert. Dazu sind Dichtungsringe OR (O-Ringe) und Befestigungselemente M vorgesehen, die für eine leicht anzubringende effektive Abdichtung sorgen. Es werden bevorzugt Schraubelemente M (metrische Schrauben und Muttern) eingesetzt, die von Außen erreichbar angeordnet sind. Dadurch kann der Faltenbalg FB sehr einfach von Außen mit einfachem Standardwerkzeug befestigt und gegebenenfalls wieder teildemontiert werden, d.h. der Faltbalg wird an der linken Seite gelöst und zusammengedrückt. Vorzugsweise wird der Faltbalg bereits werkseitig dort an die linke Wand des Behälters angeflanscht.

In der Figur 2 ist der fertige Zustand dargestellt, der sich nach der Kupplung der beiden Schaltfelder F1 und F2 ergibt. Das Klemmstück KS greift nun kraft- und formschlüssig in die Enden der beiden Sammelschienenrohre Sr 1 und SR2 und stellt somit einen gut leitenden Kontakt her. Dies wird besonders dadurch erreicht, dass die Kontaktklemmen auslenkfähig sind. d.h. dass sie einen axialen Versatz aber auch eine Winkelversatz tolerieren.

Der Faltenbalg FB sorgt für eine sehr flexible Anordnung und dennoch auch für eine vollkommene Abdichtung des Bereichs um die Sammelschienenkupplung SSK.

Die Gasbehälter der Schaltfelder F1 und F2 sind bereits werkseitig mit Isoliergas befüllt. Auf der Baustelle werden lediglich die Verbindungsräume, also das Innere des Faltbalges FB, sowie der innere Raum des Sammelschienenrohres SR1 und SR2 luft-evakuiert und anschließend mit Isoliergas IG befüllt. Dazu ist es vorteilhaft, wenn durch mindestens eines der Sammelrohre (hier SR2) das Isoliergas IG in die Schaltanlage eingeführt wird. Das Gas kann sich dann über das andere Sammelrohr SR1 sowie das Klemmstück KS schnell und sicher ausbreiten und alle vorgesehenen Bereiche erreichen und schützen.

Bei einer Anlage mit einer Mehrzahl von Schaltfeldern ist es nach dem Verbinden der Sammelschienenrohre möglich, alle Verbindungsräume und alle Sammelschienenrohre von einem Ende aus zu evaknieren und mit Isoliergas zu befüllen. Dies stellt einen einzigen Vorgang für die Mehrzahl der Schaltfelder dar, was gleichbedeutend ist mit einer wesentlichen Verminderung der Gasarbeiten auf der Baustelle.

Die vorgeschlagene Anordnung erzielt zudem eine hohe Flexibilität hinsichtlich der Herstellung, der Montage und des Betriebs der Anlage. Im besonderen ergeben sich geringere Anforderungen an die Genauigkeit der Gasbehälter und es wird eine Kompensation der Toleranz im Sammelschienenbereich erzielt. Außerdem reduziert sich der Aufwand für die Gasarbeit bei der Baustellenmontage und es vereinfacht sich der Austausch von Einzelfeldern erheblich.

Wie anhand der Fig. 1 ersichtlich wird, ragt nach dem axialen Zusammendrücken des Faltbalges FB und dem Zurückschieben des Kontaktelementes KS kein Bauteil über die Feldteilungslinie FT hinaus. Es kann sogar ein verhältnismäßig großer Abstand zwischen zwei nebeneinander stehenden Feldern vorgesehen werden, damit ein Feld einfach aus dem Verbund nach vorne oder hinten herausgeschoben werden kann und durch ein neues Feld ersetzt werden kann ohne jeglichen Eingriff in die Nachbarfelder. Der Abstand zwischen zwei Feldern wird leicht durch das Verschieben des Klemmstücks und durch die axiale Flexibilität des Metallfaltbalges überbrückt.

Das beschriebene Ausführungsbeispiel bezieht sich auf eine einpolige Sammelschienenkupplung für eine gasisolierte Mittelspannungsschaltanlage. Die Erfindung richtet sich bevorzugt an einpolige Sammelschienen mit Faltbalg, sie umfasst aber auch zahlreiche Varianten und andere Ausführungsformen, so etwa auch mehrpolige Sammelschienen und gasisolierte Schaltanlagen aller Größen und Spannungsbereiche.

## Patentansprüche

1. Sammelschienenkupplung (SSK) für eine gasisolierte Schaltanlage mit mindestens zwei Schaltfeldern (F1, F2), die beide mit Isoliergas (IG) befüllt sind und aus denen jeweils ein Sammelschienenrohr (SR1, SR2) gasdicht herausragt, wobei die Sammelschienenrohre (SR 1, SR2) über mindestens ein elektrisches Kupplungselement. (KS) miteinander verbindbar sind, und mit einem zwischen die Schaltfelder (F1, F2) montierbaren Faltenbalg (FB), der das elektrische Kupplungselement (KS)gasdicht umschließt, **dadurch gekennzeichnet, dass** der Faltenbalg (FB) und eines der beiden Sammelschienenrohre (SR2) oder beide Sammelschienenrohre (SR1, SR2) zur Befüllung mit Isoliergas ausgelegt sind.

2. Gasisolierte Schaltanlage, insbesondere gasisolierte Mittelspannungsschaltanlage, mit mindestens zwei Schaltfeldern (F1, F2), die beide mit Isoliergas (IG) befüllt sind und aus denen jeweils mindestens ein Sammelschienenrohr (SR1, SR2) gasdicht herausragt, wobei die Sammelschienenrohre (SR1, SR2) über mindestens ein elektrisches Kupplungselement (KS) miteinander verbunden sind, und mit einem zwischen den Schaltfeldern (F1, F2) montierten Faltenbalg (FB), der das elektrische Kupplungselement (KS) gasdicht umschließt, **dadurch gekennzeichnet, dass** der Faltenbalg (FB) und eines der beiden Sammelschienenrohre (SR2) oder beide Sammelschienenrohre (SR1, SR2) mit Isoliergas (IG) befüllt sind.

3. Sammelschienenkupplung (SSK) nach Anspruch 1 oder gasisolierte Schaltanlage nach Anspruch 2, **dadurch gekennzeichnet, dass** das Ende eines der Sammelschienenrohre (SR2) oder die Enden beider Sammelschienenrohre (SR1, SR2) in den von dem Faltenbalg (FB) umschlossenen Bereich hineinragt, so dass zum Begasen des Faltenbalges (FB) das Isoliergas (IG) über eines der Sammelschienenrohre (SR2) oder über beide Sammelschienenrohre (SR1, SR2) in den Faltenbalg (FB) einströmen kann.

4. Sammelschienenkupplung (SSK) oder gasisolierte Schaltanlage nach einem der vorhergehenden Ansprüche, **dadurch gekennzeichnet, dass** das elektrische Kupplungselement (KS) ein mit Spannfedern oder Spannscheiben versehenes Klemmstück ist, das sich an die Innenwandungen der Sammelschienenrohre (SR1, SR2) anpresst, und dass das Klemmstück eine elektrisch leitende, aber mechanisch nicht dichtende Verbindung zwischen den Sammelschienenrohren (SR1, SR2) herstellt, so dass das Isoliergas (IG) sowohl von dem einen Sammelschienenrohr (SR2) in das andere Sammelschienenrohr (SR1) als auch in das Innere des Faltenbalges (FB) einströmen kann.

5. Sammelschienenkupplung (SSK) oder gasisolierte Schaltanlage nach einem der vorgehenden Ansprüche, **dadurch gekennzeichnet, dass** das elektrische Kupplungselement (KS) axial verschiebbar am Ende eines Sammelschienenrohres (SR2) angeordnet ist.

6. Sammelschienenkupplung (SSK) oder gasisolierte Schaltanlage nach einem der vorhergehenden Ansprüche, **dadurch gekennzeichnet, dass** das elektrische Kupplungselement (KS) eine elektrisch leitende Klemmverbindung zwischen den Schaltfeldern (F1, F2) herstellt.

7. Sammelschienenkupplung (SSK) oder gasisolierte Schaltanlage nach einem der vorhergehenden Ansprüche, **dadurch gekennzeichnet, dass** der Faltenbalg (FB) aus Metall gefertigt ist, und dass der Faltenbalg (FB) Dichtungselemente (OR) und von außerhalb des Faltenbalges (FB) montierbare Befestigungselemente (M) aufweist, die eine form- und kraftschlüssige Dichtung mit den Außenwänden der Schaltfelder (F1, F2) herstellen.

## Revendications

1. Couplage de barres (SSK) pour une installation de distribution étanche aux gaz, comportant au moins deux panneaux de couplage (F1, F2), les deux étant remplis de gaz isolant (IG) et laissant dépasser respectivement un tube de barres (SR1, SR2) de façon étanche aux gaz, les tubes de barres (SR1, SR2) pouvant être reliés entre eux par l'intermédiaire d'au moins un élément d'accouplement électrique (KS) et comportant un soufflet (FB) pouvant être monté entre les panneaux de couplage (F1, F2), lequel renferme de façon étanche aux gaz l'élément d'accouplement électrique (KS), **caractérisé en ce que** le soufflet (FB) et l'un des deux tubes de barres (SR2) ou les deux tubes de barres (SR1, SR2) sont prévus pour être remplis de gaz isolant.

2. Installation de distribution étanche aux gaz, en particulier installation de distribution moyenne tension étanche aux gaz, comportant au moins deux panneaux de couplage (F1, F2), les deux étant remplis de gaz isolant (IG) et laissant dépasser respectivement au moins un tube de barres (SR1, SR2) de façon étanche aux gaz, les tubes de barres (SR1, SR2) étant reliés entre eux par l'intermédiaire d'au moins un élément d'accouplement électrique (KS) et comportant un soufflet (FB) monté entre les panneaux de couplage (F1, F2), lequel renferme de façon étanche aux gaz l'élément d'accouplement électrique (KS), **caractérisée en ce que** le soufflet (FB) et l'un des deux tubes de barres (SR2) ou les deux tubes de barres (SR1, SR2) sont remplis de gaz isolant (IG).

3. Couplage de barres (SSK) selon la revendication 1 ou installation de distribution étanche aux gaz selon la revendication 2, **caractérisé**(e) en ce que l'extrémité de l'un des tubes de barres (SR2) ou les extrémités des deux tubes de barres (SR1, SR2) pénètre (nt) dans la zone entourée par le soufflet (FB) de sorte que, pour le gazage du soufflet (FB), le gaz isolant (IG) peut pénétrer dans le soufflet (FB) par l'intermédiaire de l'un des tubes de barres (SR2) ou par l'intermédiaire des deux tubes de barres (SR1, SR2).

4. Couplage de barres (SSK) ou installation de distribution étanche aux gaz selon l'une des revendications précédentes, **caractérisé**(e) en ce que l'élément d'accouplement électrique (KS) est un élément de serrage, muni de ressorts de tension ou de rondelles élastiques, qui se serre contre les parois intérieures des tubes de barres (SR1, SR2), et en ce que l'élément de serrage produit une liaison électroconductrice mais mécaniquement non étanche entre les tubes de barres (SR1, SR2), de sorte que le gaz isolant (IG) peut pénétrer aussi bien depuis l'un des tubes de barres (SR2) dans l'autre tube de barres (SR1) qu'à l'intérieur du soufflet (FB).

5. Couplage de barres (SSK) ou installation de distribution étanche aux gaz selon l'une des revendications précédentes, **caractérisé**(e) en ce que l'élément d'accouplement électrique (KS) est agencé à l'extrémité d'un tube de barres (SR2) de façon à pouvoir être déplacé axialement.

6. Couplage de barres (SSK) ou installation de distribution étanche aux gaz selon l'une des revendications précédentes, **caractérisé**(e) en ce que l'élément d'accouplement électrique (KS) produit un raccord de serrage électroconducteur entre les panneaux de couplage (F1, F2).

7. Couplage de barres (SSK) ou installation de distribution étanche aux gaz selon l'une des revendications précédentes, **caractérisé**(e) en ce que le soufflet (FB) est réalisé en métal et en ce que le soufflet (FB) présente des éléments d'étanchéité (OR) et des éléments de fixation (M) pouvant être montés de l'extérieur du soufflet (FB), lesquels produisent une étanchéité par correspondance de forme et par adhérence avec les parois extérieures des panneaux de couplage (F1, F2).

## Claims

1. Bus bar coupling (SSK) for a gas-insulated substation having at least two switch panels (F1, F2), both of which are filled with insulating gas (IG) and from each of which a bus bar tube (SR1, SR2) projects in a gas-tight manner, the bus bar tubes (SR1, SR2) being connectable to one another via at least one electrical coupling element (KS), and comprising a bellows (FB) which can be mounted between the switch panels (F1, F2) and encloses the electrical coupling element (KS) in a gas-tight manner, **characterized in that** the bellows (FB) and one of the two bus bar tubes (SR2) or both bus bar tubes (SR1, SR2) is or are designed for filling with insulating gas.

2. Gas-insulated substation, in particular gas-insulated medium-voltage substation, comprising at least two switch panels (F1, F2), both of which are filled with insulating gas (IG) and from each of which at least one bus bar tube (SR1, SR2) projects in a gas-tight manner, the bus bar tubes (SR1, SR2) being connected to one another via at least one electrical coupling element (KS), and comprising a bellows (FB) which is mounted between the switch panels (F1, F2) and encloses the electrical coupling element (KS) in a gas-tight manner, **characterized in that** the bellows (FB) and one of the two bus bar tubes (SR2) or both bus bar tubes (SR1, SR2) is or are filled with insulating gas (IG).

3. Bus bar coupling (SSK) according to Claim 1 or gas-insulated substation according to Claim 2, **characterized in that** the end of one of the bus bar tubes (SR2) or the ends of both bus bar tubes (SR1, SR2) projects or project into the region enclosed by the bellows (FB), so that, for filling the bellows (FB) with gas, the insulating gas (IG) can flow into the bellows (FB) via one of the bus bar tubes (SR2) or via both bus bar tubes (SR1, SR2).

4. Bus bar coupling (SSK) or gas-insulated substation according to any of the preceding Claims, **characterized in that** the electrical coupling element (KS) is a clamping piece which is provided with tension springs or spring washers and which presses against the inner walls of the bus bar tubes (SR1, SR2), and **in that** the clamping piece produces an electrically conductive but mechanically non-sealing connection between the bus bar tubes (SR1, SR2), so that the insulating gas (IG) can flow both from one bus bar tube (SR2) into the other bus bar tube (SR1) and into the interior of the bellows (FB).

5. Bus bar coupling (SSK) or gas-insulated substation according to any of the preceding Claims, **characterized in that** the electrical coupling element (KS) is arranged so as to be axially displaceable at the end of a bus bar tube (SR2).

6. Bus bar coupling (SSK) or gas-insulated substation according to any of the preceding Claims, **characterized in that** the electrical coupling element (KS) produces an electrically conductive clamped joint between the switch panels (F1, F2).

7. Bus bar coupling (SSK) or gas-insulated substation according to any of the preceding Claims, **characterized in that** the bellows (FB) is produced from metal, and **in that** the bellows (FB) has sealing elements (OR) and has fixing elements (M) mountable from outside the bellows (FB), which produce an interlocking and friction seal with the outer walls of the switch panels (F1, F2).
